(19) Europäisches Patentamt
European Patent Office
Office européen des brevets

(11) **EP 3 963 710 B1**

(12) **EUROPÄISCHE PATENTSCHRIFT**

(45) Veröffentlichungstag und Bekanntmachung des Hinweises auf die Patenterteilung:
**26.06.2024 Patentblatt 2024/26**

(21) Anmeldenummer: **20712335.7**

(22) Anmeldetag: **18.03.2020**

(51) Internationale Patentklassifikation (IPC):
***H02P 31/00*** *(2006.01)* ***H02P 25/098*** *(2016.01)*

(52) Gemeinsame Patentklassifikation (CPC):
**H02P 6/34; H02P 23/0004; H02P 23/0031; H02P 25/03; H02P 25/098;** H02P 2006/045

(86) Internationale Anmeldenummer:
**PCT/EP2020/057383**

(87) Internationale Veröffentlichungsnummer:
**WO 2020/221503 (05.11.2020 Gazette 2020/45)**

(54) **VERFAHREN ZUM BETREIBEN EINER ELEKTRISCHEN MASCHINE, VORRICHTUNG**

METHOD FOR OPERATING AN ELECTRIC MACHINE, APPARATUS

PROCÉDÉ POUR FAIRE FONCTIONNER UNE MACHINE ÉLECTRIQUE, DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2019 DE 102019206074**

(43) Veröffentlichungstag der Anmeldung:
**09.03.2022 Patentblatt 2022/10**

(73) Patentinhaber: **Robert Bosch GmbH**
**70442 Stuttgart (DE)**

(72) Erfinder:
• **GERING, Stefan**
**71287 Weissach (DE)**
• **MANDERLA, Maximilian**
**71638 Ludwigsburg (DE)**

(56) Entgegenhaltungen:
**US-A- 5 296 793**

• **RUQI LI ET AL: "DETERMINATION OF CONVERTER CONTROL ALGORITHMS FOR STABLE BRUSHLESS DOUBLY-FED DRIVES USING FLOQUET AND LYAPUNOV TECHNIQUES", PROCEEDINGS OF THE ANNUAL POWER ELECTRONICS SPECIALISTS CONFERENCE. MASSACHUSETTS, 25 - 27 JUNE, 1991; [PROCEEDINGS OF THE ANNUAL POWER ELECTRONICS SPECIALISTS CONFERENCE], NEW YORK, IEEE, US, Bd. CONF. 22, 23. Juni 1991 (1991-06-23), Seiten 571-577, XP000278414, ISBN: 978-0-7803-0090-3**
• **Dante Youla ET AL: "A Floquet Theory of the General Linear Rotating Machine", IEEE Transactions on circuits and systems, 31. Januar 1980 (1980-01-31), Seiten 15-19, XP055696457, Gefunden im Internet: URL:https://ieeexplore.ieee.org/stampPDF/g etPDF.jsp?tp=&arnumber=1084714&ref=aHR0c HM 6Ly9pZWVleHBsb3JlLmllZWUub3JnL2Fic3RyY WN0L2RvY3VtZW50LzEwODQ3MTQ=[gefunden am 2020-05-18]**

**Beschreibung**

Die Erfindung betrifft ein Verfahren zum Betreiben einer elektrischen Maschine, insbesondere eines Kraftfahrzeugs, die einen Stator und einen Rotor aufweist, wobei der Stator eine Statorwicklung mit zumindest drei Phasen aufweist, und wobei der Rotor auf einer Rotorwelle angeordnet/anordenbar ist, wobei in Abhängigkeit von einer die Maschine modellierenden zeitinvarianten Differentialgleichung ein Soll-Stromwert für die Statorwicklung zum Erzeugen eines angeforderten Drehmoments und/oder einer angeforderten Drehzahl ermittelt wird, wobei der Soll-Stromwert mit einem Ist-Stromwert der Statorwicklung, der mit durch die Phasen fließenden elektrischen Phasenströmen korrespondiert, verglichen wird, und wobei in Abhängigkeit von dem Vergleich die Phasen derart bestromt werden, dass eine Abweichung von dem Ist-Stromwert zu dem Soll-Stromwert verringert wird.

Außerdem betrifft die Erfindung eine Vorrichtung zum Durchführen des Verfahrens.

Stand der Technik

RUQI LI ET AL: "DETERMINATION OF CONVERTER CONTROL ALGORITHMS FOR STABLE BRUSHLESS DOUBLY-FED DRIVES USING FLOQUET AND LYAPUNOV TECHNIQUES", IEEE, US, Bd. CONF. 22, 23. Juni 1991 (1991-06-23), Seiten 571-577, XP000278414, ISBN: 978-0-7803-0090-3 offenbart ein Verfahren zum Betreiben einer elektrischen Maschine. Elektrische Maschinen weisen in der Regel einen Rotor auf, der auf einer Rotorwelle beziehungsweise Antriebswelle angeordnet/anordenbar ist. Zum Antreiben des Rotors ist ein Stator mit einer Statorwicklung vorgesehen. Die Statorwicklung weist in der Regel zumindest drei Phasen auf, die derart um den Rotor verteilt angeordnet sind, dass der Rotor durch eine geeignete Bestromung der Phasen antreibbar beziehungsweise drehbar ist.

Zum Betreiben oder Regeln von elektrischen Maschinen ist es aus dem Stand der Technik bekannt, einen Soll-Stromwert für die Statorwicklung mit einem Ist-Stromwert der Statorwicklung zu vergleichen und in Abhängigkeit von dem Vergleich die Phasen der Statorwicklung derart zu bestromen, dass eine Abweichung von dem Ist-Stromwert zu dem Soll-Stromwert verringert wird. Hierzu werden beispielsweise an den Phasen anliegende elektrische Spannungen verändert. Unter dem Ist-Stromwert ist dabei ein Stromwert zu verstehen, der mit durch die Phasen fließenden elektrischen Phasenströmen korrespondiert. Beispielsweise handelt es sich bei dem Ist-Stromwert um einen in Abhängigkeit von den Phasenströmen ermittelten Stromvektor. Bei dem Soll-Stromwert handelt es sich um eine Größe, deren Dimension der Dimension des Ist-Stromwerts entspricht. Der Soll-Stromwert korrespondiert mit Phasenströmen, die notwendig sind, damit die elektrische Maschine ein angefordertes Drehmoment und/oder eine angeforderte Drehzahl erzeugt. Der Soll-Stromwert wird dabei in Abhängigkeit von einer die Maschine modellierenden zeitinvarianten Differentialgleichung ermittelt. Durch die zeitinvariante Differentialgleichung werden vorzugsweise zeitliche Verläufe der Phasenströme beschrieben. Als zeitvarianter Parameter ist insbesondere eine Induktivität der elektrischen Maschine in der zeitinvarianten Differentialgleichung enthalten. Gemäß vorbekannten Verfahren wird die zeitinvariante Differentialgleichung dabei in der Regel mittels einer dq-Transformation ermittelt.

Offenbarung der Erfindung

Das erfindungsgemäße Verfahren mit den Merkmalen des Anspruchs 1 hat den Vorteil, dass der Soll-Stromwert präzise ermittelt wird. Insbesondere wird durch das erfindungsgemäße Vorgehen erreicht, dass die elektrische Maschine ein welligkeitsfreies beziehungsweise konstantes Drehmoment erzeugt. Erfindungsgemäß ist hierzu vorgesehen, dass die zeitinvariante Differentialgleichung in Abhängigkeit von einer periodischen, linearen zeitvarianten Differentialgleichung mittels einer Floquet-Transformation ermittelt wird. Unter einer periodischen, linearen zeitvarianten Differentialgleichung ist eine Differentialgleichung zu verstehen, die zu unterschiedlichen Zeitpunkten bei gleicher Eingabe ein unterschiedliches Verhalten aufweist. Im Falle einer elektrischen Maschine handelt es sich bei der periodischen, linearen zeitvarianten Differentialgleichung um ein T-periodisches System. Gemäß der Floquet-Theorie existiert dann eine Transformation, nämlich die Floquet-Transformation, durch welche die periodische, lineare zeitvariante Differentialgleichung in eine zeitinvariante Differentialgleichung, also eine Differentialgleichung, die zu jeder Zeit bei gleicher Eingabe das gleiche Verhalten aufweist, transformiert werden kann. Insbesondere weist die elektrische Maschine eine von drei abweichende Anzahl an Phasen auf. Beispielsweise weist die elektrische Maschine mehr als drei Phasen auf. Insbesondere sind zumindest zwei der Phasen der elektrischen Maschine um einen Winkel voneinander beabstandet, der von 120° abweicht. Sowohl die von drei abweichende Anzahl der Phasen als auch der von 120° abweichende Winkel zwischen den Phasen sind durch die periodische, lineare zeitvariante Differentialgleichung beschreibbar. Weil zum Ermitteln der zeitinvarianten Differentialgleichung die Floquet-Transformation verwendet wird, ist auch in diesen Fällen die zeitinvariante Differentialgleichung in Abhängigkeit von der periodischen, linearen zeitvarianten Differentialgleichung ermittelbar.

Gemäß einer bevorzugten Ausführungsform ist vorgesehen, dass die periodische, lineare zeitvariante Differentialgleichung in Abhängigkeit von einer Drehzahl und/oder einem Drehmoment der elektrischen Maschine ermittelt wird. Es wird davon ausgegangen, dass die periodische, lineare zeitvariante Differentialgleichung auch dann in Abhängigkeit von der Drehzahl beziehungsweise dem Drehmoment der elektrischen Maschine ermittelt wird, wenn die periodische, lineare zeitvariante Differentialgleichung in Abhängigkeit von einer mit der Drehzahl korrespondierenden Größe und/oder einer mit dem Drehmoment korrespondierenden Größe ermittelt wird. Durch das Berücksichtigen der Drehzahl und/oder des Drehmoments beim Ermitteln der periodischen, linearen zeitvarianten Differentialgleichung wird eine Genauigkeit des Verfahrens gesteigert.

Vorzugsweise wird die periodische, lineare zeitvariante Differentialgleichung in Abhängigkeit von einer Systemmatrix der elektrischen Maschine ermittelt, die eine winkelabhängige Induktivität der Statorwicklung beschreibt. Durch die Systemmatrix ist die winkelabhängige Induktivität präzise darstellbar. Insbesondere sind durch die Systemmatrix von 120° abweichende Winkel zwischen den Phasen und eine von drei abweichende Anzahl an Phasen beschreibbar.

Vorzugsweise wird die Systemmatrix der elektrischen Maschine dabei in Abhängigkeit von einem Finite-Elemente-Modell der elektrischen Maschine ermittelt. Durch das Finite-Elemente-Modell ist ein analoges Modell eines durch die Statorwicklung erzeugten Magnetfeldes oder einer Induktivität der Statorwicklung präzise numerisch darstellbar. Hierzu wird ein Modell der Statorwicklung in zahlreiche kleine Teile, sogenannte Finite-Elemente, unterteilt.

Gemäß einer bevorzugten Ausführungsform ist vorgesehen, dass zur Durchführung der Floquet-Transformation ein Anfangswert vorgegeben wird, wobei die zeitinvariante Differentialgleichung in Abhängigkeit von dem Anfangswert ermittelt wird. Vorzugsweise wird der Anfangswert für eine reellwertige Matrix vorgegeben, die Teil der zeitinvarianten Differentialgleichung ist. Durch die Vorgabe des Anfangswertes wird die Durchführung beziehungsweise Lösung der Floquet-Transformation auf ein Anfangswertproblem zurückgeführt.

Gemäß einer bevorzugten Ausführungsform ist vorgesehen, dass als Anfangswert ein Mittelwert der Systemmatrix vorgegeben wird. Hierbei handelt es sich um eine besonders günstige Initialisierung beim Ermitteln der zeitinvarianten Differentialgleichung.

Gemäß einer bevorzugten Ausführungsform ist vorgesehen, dass ein Fehler, der in Abhängigkeit von dem Anfangswert ermittelten zeitinvarianten Differentialgleichung ermittelt wird, und dass die zeitinvariante Differentialgleichung solange korrigiert wird, bis der Fehler kleiner ist als ein vorgegebener Schwellenwert. Es wird also eine korrigierte zeitinvariante Differentialgleichung ermittelt. Zum einen wird dadurch gewährleistet, dass eine zumindest im Wesentlichen korrekte zeitinvariante Differentialgleichung ermittelt wird. Durch die Vorgabe des Schwellenwertes wird außerdem ein Rechenaufwand beim Korrigieren verringert, weil die Korrektur beendet wird, sobald ermittelt wird, dass der Fehler kleiner ist als der Schwellenwert.

Vorzugsweise wird die zeitinvariante Differentialgleichung in Abhängigkeit von einem Suchverfahren, insbesondere Downhill-Simplex-Verfahren, korrigiert. Hierdurch ist die zeitinvariante Differentialgleichung zuverlässig korrigierbar. Wird das Downhill-Simplex-Verfahren durchgeführt, wird auf das Ermitteln von Ableitungen der zeitinvarianten Differentialgleichung vorzugsweise verzichtet. Dadurch wird der Rechenaufwand beim Korrigieren der zeitinvarianten Differentialgleichung verringert.

Alternativ dazu wird die zeitinvariante Differentialgleichung in Abhängigkeit von einem Gradientenverfahren, insbesondere Quasi-Newton-Verfahren korrigiert. Auch durch das Gradientenverfahren ist die zeitinvariante Differentialgleichung zuverlässig korrigierbar. Wird die zeitinvariante Differentialgleichung in Abhängigkeit von dem Quasi-Newton-Verfahren korrigiert, wird vorzugsweise auf ein Ermitteln beziehungsweise Berechnen einer Hesse-Matrix der zeitinvarianten Differentialgleichung verzichtet. Auch hierdurch wird der Rechenaufwand beim Korrigieren der zeitinvarianten Differentialgleichung verringert.

Die erfindungsgemäße Vorrichtung für eine elektrische Maschine, die einen Stator und einen Rotor aufweist, wobei der Stator eine Statorwicklung mit zumindest drei Phasen aufweist, und wobei der Rotor auf einer Rotorwelle angeordnet/anordenbar ist, zeichnet sich mit den Merkmalen des Anspruchs 10 dadurch aus, dass die Vorrichtung als Steuergerät speziell dazu hergerichtet ist, bei bestimmungsgemäßem Gebrauch das erfindungsgemäße Verfahren durchzuführen. Auch daraus ergeben sich die bereits genannten Vorteile. Weitere bevorzugte Merkmale und Merkmalskombinationen ergeben sich aus dem zuvor Beschriebenen sowie aus den Ansprüchen.

Im Folgenden wird die Erfindung anhand der Zeichnungen näher erläutert. Dazu zeigen

Figur 1     eine elektrische Maschine,

Figur 2     Verläufe von durch Phasen der elektrischen Maschine fließenden elektrischen Phasenströmen,

Figur 3     Verläufe von Maschinenmomenten der elektrischen Maschine,

Figur 4     ein Verfahren zum Betreiben der elektrischen Maschine.

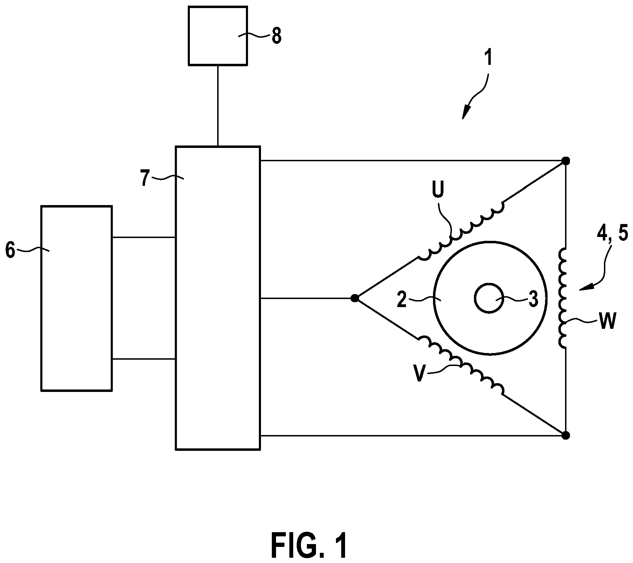

Figur 1 zeigt in einer schematischen Darstellung eine elektrische Maschine 1. Beispielsweise handelt es sich bei der elektrischen Maschine 1 um eine permanentmagneterregte elektrische Synchronmaschine. Die elektrische Maschine 1 weist einen Rotor 2 auf, der auf einer Rotorwelle 3 angeordnet ist. Bei der Rotorwelle 3 handelt es sich vorliegend um eine Antriebswelle eines nicht dargestellten Kraftfahrzeugs. Die elektrische Maschine 1 weist außerdem einen Stator 4 mit einer Statorwicklung 5 auf. Die Statorwicklung umfasst gemäß dem in Figur 1 dargestellten Ausführungsbeispiel drei Phasen U, V und W. Die Phasen U, V und W sind vorliegend durch eine Dreieckschaltung miteinander verschaltet. Die Phasen U, V und W sind derart um den Rotor 2 verteilt angeordnet, dass der Rotor 2 durch eine geeignete Bestromung der Phasen U, V und W antreibbar beziehungsweise drehbar ist. Gemäß weiterer Ausführungsbeispielen ist eine von drei abweichende Anzahl an Phasen vorgesehen. Außerdem sind die Phasen gemäß weiterer Ausführungsbeispielen durch eine andere Schaltung, beispielsweise eine Sternschaltung, miteinander verschaltet.

Der elektrischen Maschine 1 ist ein elektrischer Energiespeicher 6 zugeordnet. Der Energiespeicher 6 ist mittels einer Leistungselektronik 7 mit den Phasen U, V und W verbunden. Durch die Leistungselektronik 7 ist eine durch den Energiespeicher 6 bereitgestellte Gleichspannung in Wechselspannungen zum Bestromen der Phasen U, V und W wandelbar.

Die elektrische Maschine 1 weist außerdem eine Vorrichtung 8 auf, die als Steuergerät 8 dazu ausgebildet ist, die Leistungselektronik 7 anzusteuern beziehungsweise nicht dargestellte Schaltelemente der Leistungselektronik 7 zu schalten.

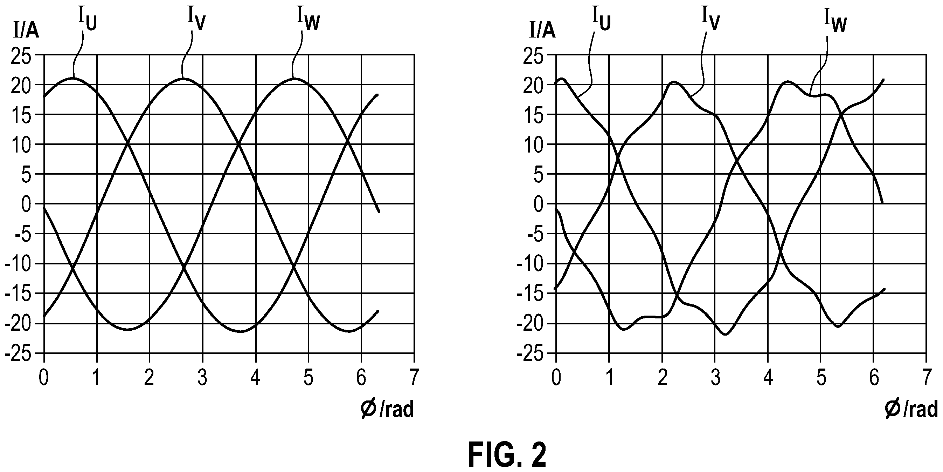

Figur 2 zeigt zwei Diagramme, in denen Verläufe von durch die Phasen U, V und W der elektrischen Maschine 1 fließenden Phasenströmen $I_U$, $I_V$ und $I_W$ dargestellt sind. Bei dem Phasenstrom $I_U$ handelt es sich dabei um den durch die Phase U fließenden Phasenstrom. Bei dem Phasenstrom $I_V$ handelt es sich um den durch die Phase V fließenden Phasenstrom. Bei dem Phasenstrom $I_W$ handelt es sich um den durch die Phase W fließenden Phasenstrom. Auf der Y-Achse der Diagramme ist dabei ein Stromwert $I$ der Phasenströme in Ampere dargestellt. Auf der X-Achse der Diagramme ist ein Drehwinkel $\Phi$ des Rotors 2 in Radiant dargestellt.

Gemäß dem in Figur 2 links dargestellten ersten Diagramm weisen die Phasenströme $I_U$, $I_V$ und $I_W$ jeweils einen sinusförmigen Verlauf auf. Die Phasenströme $I_U$, $I_V$ und $I_W$ sind außerdem jeweils um 120° beziehungsweise $\frac{2}{3} \times \pi$    Radiant zueinander versetzt. Eine Summe der Phasenströme $I_U$, $I_V$ und $I_W$ ist zu jedem Drehwinkel $\Phi$ gleich.

Gemäß dem in Figur 2 rechts dargestellten zweiten Diagramm weisen die Phasenströme $I_U$, $I_V$ und $I_W$ jeweils einen Verlauf auf, der eine Grundwelle und zumindest eine Oberwelle aufweist. Der Verlauf weicht also von einer Sinusform ab. Die Summe der Phasenströme $I_U$, $I_V$ und $I_W$ ist in Abhängigkeit von dem Drehwinkel $\Phi$ unterschiedlich.

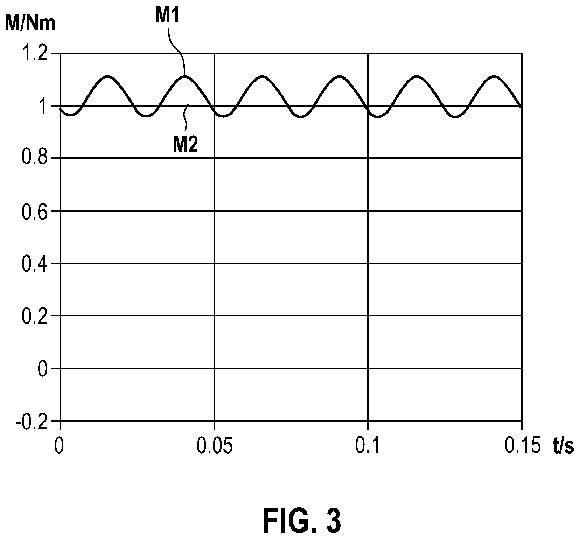

Figur 3 zeigt anhand eines Diagramms einen Verlauf von Maschinenmomenten der elektrischen Maschine 1. Auf der Y-Achse des Diagramms ist dabei das Maschinenmoment $M$ in Newtonmeter und auf der X-Achse die Zeit $t$ in Sekunden dargestellt. Durchfließen die in dem ersten Diagramm der Figur 2 dargestellten sinusförmigen Phasenströme $I_U$, $I_V$ und $I_W$ die Phasen U, V und W, so resultiert daraus der Maschinenmomentverlauf $M_1$. Wie aus Figur 3 ersichtlich ist, ist der Maschinenmomentverlauf $M_1$ wellenförmig. Der wellenförmige Maschinenmomentverlauf $M_1$ resultiert aus Oberwellen in den Induktivitäten der elektrischen Maschine 1. Diese sind bedingt durch die Geometrie der elektrischen Maschine 1 und/oder durch Sättigungseffekte. Wird also die Leistungselektronik 7 derart angesteuert, dass Verläufe der Phasenströme $I_U$, $I_V$ und $I_W$ sinusförmig und jeweils um 120° zueinander versetzt sind, so wird durch die Maschine 1 kein konstantes beziehungsweise welligkeitsfreies Drehmoment erzeugt.

Durchfließen die im zweiten Diagramm der Figur 2 dargestellten Phasenströme $I_U$, $I_V$ und $I_W$ die Phasen U, V und W, so resultiert daraus der Maschinenmomentverlauf $M_2$. Der Maschinenmomentverlauf $M_2$ ist im Wesentlichen welligkeitsfrei beziehungsweise konstant. Die in dem zweiten Diagramm der Figur 2 dargestellten Phasenströme $I_U$, $I_V$ und $I_W$ entsprechen also den Phasenströmen, die benötigt werden, damit die elektrische Maschine 1 ein welligkeitsfreies Drehmoment erzeugt.

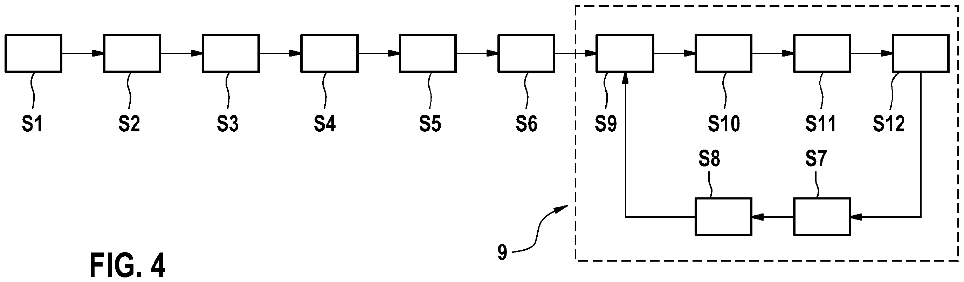

Im Folgenden wird mit Bezug auf Figur 4 ein Verfahren zum Betreiben der elektrischen Maschine 1 beschrieben. Durch das Verfahren wird gewährleistet, dass die Phasenströme $I_U$, $I_V$ und $I_W$ derart gesteuert oder geregelt werden, dass durch die Maschine 1 ein welligkeitsfreies Drehmoment erzeugt wird.

In einem Schritt S1 wird eine Drehzahl $\omega$ des Rotors 2 oder eine mit der Drehzahl $\omega$ korrespondierende Größe, beispielsweise eine Drehgeschwindigkeit des Rotors 2, ermittelt. Bei der Drehzahl $\omega$ handelt es sich beispielsweise um die aktuelle Drehzahl $\omega$ des Rotors 2. Alternativ dazu handelt es sich um eine von der aktuellen Drehzahl $\omega$ abweichende, mögliche Drehzahl $\omega$ des Rotors 2. Außerdem wird in dem Schritt S1 die ermittelte Drehzahl $\omega$ beziehungsweise die Größe der Vorrichtung 8 bereitgestellt. Alternativ oder zusätzlich zu der Drehzahl $\omega$ wird in dem Schritt S1 ein Drehmoment des Rotors 2 ermittelt und der Vorrichtung 8 bereitgestellt.

In einem Schritt S2 ermittelt die Vorrichtung 8 in Abhängigkeit von der Drehzahl $\omega$ beziehungsweise der Größe einerseits und einer Systemmatrix $A_{abc}(t)$ der elektrischen Maschine 1 andererseits eine periodische, lineare zeitvariante Differentialgleichung mit der nachfolgenden Gleichung (1.1):

$$\dot{I}_{\mathrm{abc}} = A_{\mathrm{abc}}(t)I_{\mathrm{abc}} \qquad (1.1)$$

Unter der Systemmatrix $A_{\mathrm{abc}}(t)$ ist dabei eine Matrix zu verstehen, die eine winkelabhängige Induktivität der elektrischen Maschine 1 beschreibt. Insbesondere besteht ein nichtlinearer Zusammenhang zwischen der Systemmatrix $A_{\mathrm{abc}}(t)$ und der Induktivität der elektrischen Maschine 1. $I_{\mathrm{abc}}$ ist ein Stromwert, der mit den Phasenströmen $I_U$, $I_V$ und $I_W$ korrespondiert. Der Stromwert $I_{\mathrm{abc}}$ stellt die Phasenströme $I_U$, $I_V$ und $I_W$ in Strang-Koordinaten beziehungsweise Phasen-Koordinaten dar. Insbesondere sind in der periodischen, linearen zeitvarianten Differentialgleichung zusätzlich zu den in Gleichung (1.1) aufgeführten Parametern ein eine elektrische Spannung beschreibender Eingangsterm und/oder ein eine elektromagnetische Kraft eines Permanentmagneten der elektrischen Maschine 1 beschreibender Störterm enthalten. Der Eingangsterm und der Störterm werden gemäß dem in Figur 4 dargestellten Verfahren vorzugsweise nicht berücksichtigt und sind deshalb vorliegend in Gleichung (1.1) nicht aufgeführt. Vorzugsweise ermittelt die Vorrichtung 8 die Systemmatrix $A_{\mathrm{abc}}(t)$ in Abhängigkeit von einem Finite-Elemente-Modell der elektrischen Maschine 1. Insbesondere werden durch das Finite-Elemente-Modell, die Systemmatrix $A_{\mathrm{abc}}(t)$ und die periodische, lineare zeitvariante Differentialgleichung auch Induktivitätsoberwellen der elektrischen Maschine 1 und von 120° abweichende Winkel zwischen den Phasen U,V und W beschrieben. Die periodische, lineare zeitvariante Differentialgleichung ist demnach ein präzises Verhaltensmodell der elektrischen Maschine 1 für gewählte Arbeitspunkte, also Drehzahlen $\omega$, mit Drehzahlen $\omega$ korrespondierenden Größen oder Drehmomente.

In einem Schritt S3 ermittelt die Vorrichtung 8 in Abhängigkeit von der periodischen, linearen zeitvarianten Differentialgleichung mittels einer Floquet-Transformation eine zeitinvariante Differentialgleichung. Diese wird durch die nachfolgende Gleichung (1.2) beschrieben.

$$\dot{I}_{\mathrm{fl}} = A_{\mathrm{fl}}I_{\mathrm{fl}} = QI_{\mathrm{fl}} \qquad (1.2)$$

Dabei beschreibt Q eine reellwertige Matrix und $I_{\mathrm{fl}}$ einen Stromwert, der mit den Phasenströmen $I_U$, $I_V$ und $I_W$ korrespondiert. Der Stromwert $I_{\mathrm{fl}}$ stellt die Phasenströme $I_U$, $I_V$ und $I_W$ in Floquet-Koordinaten dar. Weil es sich bei der periodischen, linearen zeitvarianten Differentialgleichung um eine T-periodische Differentialgleichung handelt ist diese gemäß der Floquet-Theorie in die zeitinvariante Differentialgleichung transformierbar. Es existiert dann eine durch die nachfolgende Gleichung (1.3) beschreibbare Transformation.

$$I_{\mathrm{fl}} = P(t)I_{\mathrm{abc}} \qquad (1.3)$$

$P(t)$ ist dabei eine Transformationsmatrix. Diese ergibt sich aus der Fundamentalmatrix $\phi(t)$, welche für periodische Systeme gemäß der nachfolgenden Gleichung (1.4) dargestellt werden kann.

$$\phi(t) = P(t)e^{Qt} \qquad (1.4)$$

Aus dem durch die nachfolgende Gleichung (1.5) beschriebenen mathematischen Zusammenhang ergibt sich ferner die Gleichung (1.6).

$$\dot{\phi}(t) = \dot{P}(t)e^{Qt} + P(t)Qe^{Qt} = \left(\dot{P}(t) + P(t)Q\right)e^{Qt} = A_{\mathrm{abc}}(t)P(t)e^{Qt} \quad (1.5)$$

$$\dot{P} = AP - PQ \qquad (1.6)$$

Zur Durchführung beziehungsweise Berechnung der Floquet-Transformation wird die Gleichung (1.6) gelöst. Hierzu wird ein Anfangswert für die Matrix Q vorgegeben. Es wird also ein Anfangswert für einen Teil der zeitinvarianten Differentialgleichung vorgegeben. Vorzugsweise wird als Anfangswert ein Mittelwert der Systemmatrix $A_{\mathrm{abc}}(t)$ vorgegeben.

In einem Schritt S4 ermittelt die Vorrichtung 8 einen Fehler J der in Abhängigkeit von dem Anfangswert ermittelten zeitinvarianten Differentialgleichung. Der Fehler J wird gemäß der nachfolgenden Gleichung (1.7) ermittelt.

$$J = \|P(2T) - E\| \qquad (1.7)$$

Dabei beschreibt *E* die Einheitsmatrix der Dimension von *P(t)*. Aufgrund der Periodizität des Systems wird davon ausgegangen, dass die Transformationsmatrix *P(t)* zu den Zeitpunkten *t* = 0 und *t* = 2*T* der Einheitsmatrix *E* entspricht.

In einem Schritt S5 wird die zeitinvariante Differentialgleichung beziehungsweise die Matrix *Q* durch die Vorrichtung 8 solange korrigiert, bis der Fehler *J* kleiner ist als ein vorgegebener Schwellenwert. Hierzu wird in dem Schritt S5 beispielsweise ein Suchverfahren, insbesondere Downhill-Simplex-Verfahren oder ein Gradientenverfahren, insbesondere Quasi-Newton-Verfahren, verwendet.

In einem Schritt S6 ermittelt die Vorrichtung 8 in Abhängigkeit von der korrigierten zeitinvarianten Differentialgleichung einerseits und einem vorgegebenen Drehmoment oder einer vorgegebenen Drehzahl andererseits einen Soll-Stromwert $I_{\text{Soll,fl}}$. Der Soll-Stromwert $I_{\text{Soll,fl}}$ korrespondiert mit den Phasenströmen $I_U$, $I_V$ und $I_W$, die die Phasen U, V beziehungsweise W durchfließen müssen, damit das vorgegebene Drehmoment beziehungsweise die vorgegebene Drehzahl durch die elektrische Maschine 1 erzeugt wird. Der Soll-Stromwert $I_{\text{Soll,fl}}$ stellt die Phasenströme $I_U$, $I_V$ und $I_W$ in Floquet-Koordinaten dar.

In einem Schritt S7 werden die aktuellen Phasenströme $I_U$, $I_V$ und $I_W$ ermittelt. Beispielsweise wird jeder der aktuellen Phasenströme $I_U$, $I_V$ und $I_W$ jeweils durch eine Strommesseinrichtung erfasst und der Vorrichtung 8 bereitgestellt.

In einem Schritt S8 ermittelt die Vorrichtung 8 in Abhängigkeit von den aktuellen Phasenströmen $I_U$, $I_V$ und $I_W$ einen Ist-Stromwert $I_{\text{Ist,fl}}$. Der Ist-Stromwert $I_{\text{Ist,fl}}$ korrespondiert mit den aktuellen Phasenströmen $I_U$, $I_V$ und $I_W$ und stellt die aktuellen Phasenströme $I_U$, $I_V$ und $I_W$ in Floquet-Koordinaten dar. Der Ist-Stromwert $I_{\text{Ist,fl}}$ und der Soll-Stromwert $I_{\text{Soll,fl}}$ weisen dabei eine gleiche Dimension beziehungsweise physikalische Einheit auf.

In einem Schritt S9 vergleicht die Vorrichtung 8 den Soll-Stromwert $I_{\text{Soll,fl}}$ mit dem Ist-Stromwert $I_{\text{Ist,fl}}$. Beispielsweise berechnet die Vorrichtung 8 hierzu eine Differenz aus dem Soll-Stromwert $I_{\text{Soll,fl}}$ und dem Ist-Stromwert $I_{\text{Ist,fl}}$.

In einem Schritt S10 ermittelt die Vorrichtung 8 in Abhängigkeit von dem Vergleich einen Soll-Spannungswert $U_{\text{Soll,fl}}$, der mit elektrischen Spannungen korrespondiert, die an den Phasen U, V beziehungsweise W angelegt werden müssen, damit die Differenz zwischen dem Ist-Stromwert $I_{\text{Ist,fl}}$ und dem Soll-Stromwert $I_{\text{Soll,fl}}$ verringert wird. Der Soll-Spannungswert $U_{\text{Soll,fl}}$ stellt die anzulegenden Spannungen in Floquet-Koordinaten dar.

In einem Schritt S11 ermittelt die Vorrichtung 8 in Abhängigkeit von dem Soll-Spannungswert $U_{\text{Soll,fl}}$ einen Soll-Spannungswert $U_{\text{Soll,abc}}$. Dieser stellt die anzulegenden Spannungen in Strang-Koordinaten beziehungsweise Phasen-Koordinaten dar.

In einem Schritt S12 steuert dann die Vorrichtung 8 die Leistungselektronik 7 derart an, dass die anzulegenden Spannungen an die Phasen U, V und W angelegt werden.

Vorzugsweise bilden die Schritte S7 bis S12 einen Regelkreis 9 aus. Im Anschluss an den Schritt S12 wird dann vorzugsweise auf den Schritt S7 zurückverwiesen.

Vorzugsweise finden die Schritte S1 bis S5 zeitlich beabstandet von den Schritten S6 bis S12 statt. Beispielsweise wird gemäß den Schritten S1 bis S5 in Abhängigkeit von der Drehzahl $\omega$ des Rotors 2 oder einer mit der Drehzahl $\omega$ des Rotors 2 korrespondierenden Größe eine zeitinvariante Differentialgleichung ermittelt und die ermittelte zeitinvariante Differentialgleichung wird in einem Datenspeicher gespeichert. Vorzugsweise wird für eine Vielzahl von Drehzahlen $\omega$ des Rotors 2 beziehungsweise mit Drehzahlen $\omega$ des Rotors 2 korrespondierenden Größen jeweils eine zeitinvariante Differentialgleichung ermittelt und die ermittelten zeitinvarianten Differentialgleichungen werden in dem Datenspeicher gespeichert. Zur zeitlich versetzten Durchführung der Verfahrensschritte S6 bis S12 wird dann die gespeicherte zeitinvariante Differentialgleichung beziehungsweise eine der gespeicherten zeitinvarianten Differentialgleichungen der Vorrichtung 8 bereitgestellt.

**Patentansprüche**

1. Verfahren zum Betreiben einer elektrischen Maschine (1), insbesondere eines Kraftfahrzeugs, die einen Stator (4) und einen Rotor (2) aufweist, wobei der Stator (4) eine Statorwicklung (5) mit zumindest drei Phasen (U,V,W) aufweist, und wobei der Rotor (2) auf einer Rotorwelle (3) angeordnet oder anordenbar ist, wobei in Abhängigkeit von einer die Maschine (1) modellierenden zeitinvarianten Differentialgleichung ein Soll-Stromwert ($I_{\text{Soll,fl}}$) für die Statorwicklung (5) zum Erzeugen eines angeforderten Drehmoments und/oder einer angeforderten Drehzahl ermittelt wird, wobei der Soll-Stromwert ($I_{\text{Soll,fl}}$) mit einem Ist-Stromwert ($I_{\text{Ist,fl}}$) der Statorwicklung (5), der mit durch die Phasen (U,V,W) fließenden elektrischen Phasenströmen ($I_U$, $I_V$, $I_W$) korrespondiert, verglichen wird, und wobei in Abhängigkeit von dem Vergleich die Phasen (U,V,W) derart bestromt werden, dass eine Abweichung von dem Ist-Stromwert ($I_{\text{Ist,fl}}$) zu dem Soll-Stromwert ($I_{\text{Soll,fl}}$) verringert wird, **dadurch gekennzeichnet, dass** die zeitinvariante Differentialgleichung in Abhängigkeit von einer periodischen, linearen zeitvarianten Differentialgleichung mittels einer Floquet-Transformation ermittelt wird.

**2.** Verfahren nach Anspruch 1, **dadurch gekennzeichnet, dass** die periodische, lineare zeitvariante Differentialgleichung in Abhängigkeit von einer Drehzahl ($\omega$) und/oder einem Drehmoment der elektrischen Maschine (1) ermittelt wird.

**3.** Verfahren nach einem der vorhergehenden Ansprüche, **dadurch gekennzeichnet, dass** die periodische, lineare zeitvariante Differentialgleichung in Abhängigkeit von einer Systemmatrix ($A_{abc}(t)$) der elektrischen Maschine (1), die eine winkelabhängige Induktivität der Statorwicklung (5) beschreibt, ermittelt wird.

**4.** Verfahren nach Anspruch 3, **dadurch gekennzeichnet, dass** die Systemmatrix ($A_{abc}(t)$) der elektrischen Maschine (1) in Abhängigkeit von einem Finite-Elemente-Modell der elektrischen Maschine (1) ermittelt wird.

**5.** Verfahren nach einem der vorhergehenden Ansprüche, **dadurch gekennzeichnet, dass** zur Durchführung der Floquet-Transformation ein Anfangswert vorgegeben wird, wobei die zeitinvariante Differentialgleichung in Abhängigkeit von dem Anfangswert ermittelt wird.

**6.** Verfahren nach Anspruch 5, **dadurch gekennzeichnet, dass** als Anfangswert ein Mittelwert der Systemmatrix ($A_{abc}(t)$) vorgegeben wird.

**7.** Verfahren nach einem der Ansprüche 5 und 6, **dadurch gekennzeichnet, dass** ein Fehler ($J$) der in Abhängigkeit von dem Anfangswert ermittelten zeitinvarianten Differentialgleichung ermittelt wird, und dass die zeitinvariante Differentialgleichung solange korrigiert wird, bis der Fehler ($J$) kleiner ist als ein vorgegebener Schwellenwert.

**8.** Verfahren nach Anspruch 7, **dadurch gekennzeichnet, dass** die zeitinvariante Differentialgleichung in Abhängigkeit von einem Suchverfahren, insbesondere Downhill-Simplex-Verfahren, korrigiert wird.

**9.** Verfahren nach Anspruch 7, **dadurch gekennzeichnet, dass** die zeitinvariante Differentialgleichung in Abhängigkeit von einem Gradientenverfahren, insbesondere Quasi-Newton-Verfahren, korrigiert wird.

**10.** Vorrichtung (8) für eine elektrische Maschine (1), insbesondere eines Kraftfahrzeugs, wobei die Maschine (1) einen Stator (4) und einen Rotor (2) aufweist, wobei der Stator (4) eine Statorwicklung (5) mit zumindest drei Phasen (U,V,W) aufweist, und wobei der Rotor (2) auf einer Rotorwelle (3) angeordnet/anordenbar ist, **dadurch gekennzeichnet, dass** die Vorrichtung (8) als Steuergerät (8) speziell dazu hergerichtet ist, bei bestimmungsgemäßem Gebrauch das Verfahren gemäß einem der Ansprüche 1 bis 9 durchzuführen.

**Claims**

**1.** Method for operating an electric machine (1), in particular of a motor vehicle, which has a stator (4) and a rotor (2), wherein the stator (4) has a stator winding (5) with at least three phases (U,V,W), and wherein the rotor (2) is arranged/arrangeable on a rotor shaft (3), wherein a desired current value ($I_{Soll,fl}$) of the stator winding (5) for generating a required torque and/or a required speed is determined on the basis of a time-invariant differential equation modeling the machine (1), wherein the desired current value ($I_{Soll,fl}$) is compared with an actual current value ($I_{Ist,fl}$) of the stator winding (5), which corresponds to electric phase currents ($I_U$, $I_V$, $I_W$) flowing through the phases (U,V,W), and wherein, on the basis of the comparison, the phases (U,V,W) are energized such that a deviation of the actual current value ($I_{Ist,fl}$) from the desired current value ($I_{Soll,fl}$) is reduced, **characterized in that** the time-invariant differential equation is determined on the basis of a periodic, linear time-variant differential equation by means of a Floquet transformation.

**2.** Method according to Claim 1, **characterized in that** the periodic, linear time-variant differential equation is determined on the basis of a speed ($\omega$) and/or a torque of the electric machine (1).

**3.** Method according to one of the preceding claims, **characterized in that** the periodic, linear time-variant differential equation is determined on the basis of a system matrix ($A_{abc}(t)$) of the electric machine (1), which describes an angle-dependent inductance of the stator winding (5).

**4.** Method according to Claim 3, **characterized in that** the system matrix ($A_{abc}(t)$) of the electric machine (1) is determined on the basis of a finite element model of the electric machine (1).

5. Method according to one of the preceding claims, **characterized in that,** to implement the Floquet transformation, an initial value is specified, wherein the time-invariant differential equation is determined on the basis of the initial value.

6. Method according to Claim 5, **characterized in that** a mean value of the system matrix ($A_{\mathrm{abc}}(t)$) is specified as the initial value.

7. Method according to one of Claims 5 and 6, **characterized in that** an error (J) of the time-invariant differential equation determined on the basis of the initial value is determined and **in that** the time-invariant differential equation is corrected until the error (J) is smaller than a specified threshold value.

8. Method according to Claim 7, **characterized in that** the time-invariant differential equation is corrected on the basis of a search method, in particular a downhill simplex method.

9. Method according to Claim 7, **characterized in that** the time-invariant differential equation is corrected on the basis of a gradient method, in particular a quasi-Newton method.

10. Device (8) for an electric machine (1), in particular of a motor vehicle, wherein the machine (1) has a stator (4) and a rotor (2), wherein the stator (4) has a stator winding (5) with at least three phases (U,V,W), and wherein the rotor (2) is arranged/arrangeable on a rotor shaft (3), **characterized in that** the device (8) is specifically designed as a control unit (8) to implement the method according to one of Claims 1 to 9 in normal use.

**Revendications**

1. Procédé de fonctionnement d'une machine électrique (1), notamment un véhicule automobile, qui comporte un stator (4) et un rotor (2), le stator (4) comportant un enroulement de stator (5) pourvu d'au moins trois phases (U, V, W), et le rotor (2) étant disposé ou pouvant être disposé sur un arbre de rotor (3), une valeur de courant cible ($I_{\mathrm{Soll,fl}}$) étant déterminée pour l'enroulement de stator (5), en fonction d'une équation différentielle invariante dans le temps qui modélise la machine (1), afin de générer un couple demandé et/ou une vitesse de rotation demandée, la valeur de courant cible ($I_{\mathrm{Soll,fl}}$) étant comparée à une valeur de courant réelle ($I_{\mathrm{Ist,fl}}$) de l'enroulement de stator (5), laquelle correspond aux courants de phase électriques ($I_U$, $I_V$, $I_W$) circulant à travers les phases (U, V, W), les phases (U, V, W) étant alimentées en courant en fonction de la comparaison de manière à réduire un écart entre la valeur de courant réelle ($I_{\mathrm{Ist,fl}}$) et la valeur de courant cible ($I_{\mathrm{Soll,fl}}$), **caractérisé en ce que** l'équation différentielle invariante dans le temps est déterminée en fonction d'une équation différentielle variable dans le temps, périodique et linéaire à l'aide d'une transformation de Floquet.

2. Procédé selon la revendication 1, **caractérisé en ce que** l'équation différentielle variable dans le temps, périodique et linéaire est déterminée en fonction d'une vitesse de rotation ($\omega$) et/ou d'un couple de la machine électrique (1).

3. Procédé selon l'une des revendications précédentes, **caractérisé en ce que** l'équation différentielle variable dans le temps, périodique et linéaire est déterminée en fonction d'une matrice de système ($A_{\mathrm{abc}}(t)$) de la machine électrique (1), laquelle matrice décrit une inductance, dépendante de l'angle, de l'enroulement de stator (5).

4. Procédé selon la revendication 3, **caractérisé en ce que** la matrice de système ($A_{\mathrm{abc}}(t)$) de la machine électrique (1) est déterminée en fonction d'un modèle à éléments finis de la machine électrique (1).

5. Procédé selon l'une des revendications précédentes, **caractérisé en ce qu'**une valeur initiale est spécifiée pour exécuter la transformation de Floquet, l'équation différentielle invariante dans le temps étant déterminée en fonction de la valeur initiale.

6. Procédé selon la revendication 5, **caractérisé en ce qu'**une valeur moyenne de la matrice de système ($A_{\mathrm{abc}}(t)$) est spécifiée comme valeur initiale.

7. Procédé selon l'une des revendications 5 et 6, **caractérisé en ce qu'**une erreur (J) de l'équation différentielle invariante dans le temps, déterminée en fonction de la valeur initiale, est déterminée et **en ce que** l'équation différentielle invariante dans le temps est corrigée jusqu'à ce que l'erreur (J) soit inférieure à une valeur seuil spécifiée.

**8.** Procédé selon la revendication 7, **caractérisé en ce que** l'équation différentielle invariante dans le temps est corrigée en fonction d'une méthode de recherche, notamment la méthode Downhill-Simplex.

**9.** Procédé selon la revendication 7, **caractérisé en ce que** l'équation différentielle invariante dans le temps est corrigée en fonction d'une méthode de gradient, notamment une méthode quasi-Newton.

**10.** Dispositif (8) destiné à une machine électrique (1), notamment un véhicule automobile, la machine (1) comprenant un stator (4) et un rotor (2), le stator (4) comportant un enroulement de stator (5) pourvu d'au moins trois phases (U, V, W), et le rotor (2) étant disposé/pouvant être disposé sur un arbre de rotor (3), **caractérisé en ce que** le dispositif (8) est spécialement conçu comme un appareil de commande (8) pour mettre en œuvre le procédé selon l'une des revendications 1 à 9 lorsqu'il est utilisé comme prévu.

FIG. 1

FIG. 2

EP 3 963 710 B1

**FIG. 3**

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **RUQI LI et al.** DETERMINATION OF CONVERTER CONTROL ALGORITHMS FOR STABLE BRUSHLESS DOUBLY-FED DRIVES USING FLOQUET AND LYAPUNOV TECHNIQUES. IEEE, 23. Juni 1991, 571-577